# EUROPEAN PATENT APPLICATION

(11) **EP 4 851 952 A1**
(43) Date of publication of application: **09.12.2026**
(21) Application number: 25300076.4
(22) Date of filing: 06.06.2025
(51) Int. Cl.: G06V 10/82, G06T 5/70

(54) **DENOISING IMAGES USING A GENERATIVE ADVERSARIAL NETWORK**

(71) Applicant: Sony Interactive Entertainment Inc., Tokyo 108-0075 (JP)
(72) Inventor: MAKRIDIS, Pavlos, Tokyo, 108-0075 (JP); LECHAT, Alexis, Tokyo, 108-0075 (JP); TREDER, Matthias, Tokyo, 108-0075 (JP); TORANO, Jesus Alejandro Zarzar, Tokyo, 108-0075 (JP)
(74) Representative: Fish & Richardson P.C.

(57) **Abstract**

Methods, systems, and apparatus for temporally stabilized denoising using a generative adversarial network (GAN). An input sequence of rendered images representing a visual representation of a virtual environment is received. The input sequence is generated by a renderer of an electronic gaming device and provided to a GAN trained to generate a de-noised rendered output sequence to reduce a likelihood of temporal artifacts among two or more images in the input sequence of rendered image. The GAN generates a de-noised rendered output sequence using the input sequence. The GAN includes a generator network trained to generate training denoised sequences and a discriminator network trained to classify training denoised sequences from the generator network. A classification of a training denoised sequence includes a label indicating whether the training denoised sequence is a temporally stable sequence of images. The de-noised rendered output sequence is provided for output by the electronic gaming device.

## Description

### TECHNICAL FIELD

This specification relates generally to real-time rendering of digital images and more particularly to temporally stable neural denoising in Monte Carlo rendering without temporal accumulation.

### BACKGROUND

Real-time rendering includes the relatively rapid generation of digital images (referred to as images "herein"). For example, real-time rendering can be used to generate images as frames of videos at frame rates of 30 frames per second (FPS), 60 FPS, or higher. For certain use cases, such as video games, virtual reality (VR)/augmented reality (AR), simulations and the like, graphics are required to be rendered rapidly (e.g., ≥ 60 FPS), such as in response to user input. The goal of real-time rendering is to produce visually convincing images at high speed. However, real-time rendering must balance visual quality with computational performance in terms of being achievable under realistic hardware constraints (e.g., processors and memory available in consumer gaming consoles, VR/AR headsets, and the like).

### SUMMARY

This specification describes systems, methods, devices, and other techniques relating to real-time rendering of digital images and more particularly to temporally stable neural denoising in Monte Carlo rendering without temporal accumulation. The disclosed technology leverages a generative adversarial network (GAN) to provide temporally stable denoising for rendering image sequences, such as images rendered by Monte Carlo rendering. The GAN described herein includes a denoising generator network (also referred to as a "generator" ) trained to generate sequences of temporally stable de-noised images and a denoiser discriminator (also referred to as a "discriminator) trained to distinguish between temporally stable and unstable image sequences. The discriminator is trained to distinguish temporally unstable image sequences from temporally stable ground truth image sequences. The generator is trained adversarially to the discriminator to improve the generator's ability to reduce temporal artifacts through de-noising image sequences generated by rendering techniques without temporal accumulation.

The disclosed GAN leverages the ability to iteratively train a discriminator to generate classification labels indicating whether an image sequence provided to the discriminator is temporally stable or unstable. As described in further this document, a sequence of rendered images provides a visual representation of a video game at multiple, sequential time instances. A temporally stable sequence is a sequence of rendered images with little to no temporal artifacts present among the images. A discriminator is likely to generate a classification label indicating a temporally unstable image sequence if a number of temporal artifacts are found, such the temporal artifacts found in in a de-noised image sequence generated by a naive de-noising network. Thus, disclosed technology iteratively trains the generator to de-noise image sequences in a way that reduce a likelihood of temporal artifacts occurring in a sequence of rendered images, and/or reduces the number of temporal artifacts in a sequence of rendered images. In this way, the generator is trained to generate temporally stable image sequences without relying on temporal accumulation, while achieving a similar photorealistic performance with reduced temporal artifacts at a lower computational cost, e.g., compared to full-path tracing.

Furthermore, the disclosed GAN has an architecture that can further include a predictive network to assess the de-noising performance of the generator with respect to both color and input normals in a rendered image sequence. For example, the rendered image sequence can include a visual representation of objects in a virtual environment, which represents both the color and surface normals of the objects. The generator network can generate a de-noised output that can be evaluated by a trained predictive network. The predictive network is trained to generate predicted surface normals using the de-noised output from the generator to determine whether the accuracy of the surface normals of the objects from the input rendered image sequence were compromised in the de-noising process performed by the generator. The predicted normals can be matched to the input normals of the objects in the rendered image sequence. In this way, the generator can be trained to de-noise rendered images while maintaining normals of objects in the rendered image sequence.

In general, innovative aspects of the subject matter described in this specification can include actions of a computer-implemented method. The computer-implemented method includes receiving an input sequence of rendered images representing a visual representation of one or more objects in a virtual environment. The input sequence of rendered images is generated by a renderer of an electronic gaming device. computer-implemented method includes providing the input sequence of rendered images to a generative adversarial network. The generative adversarial network is trained to generate a de-noised rendered output sequence by de-noising images in the input sequence of rendered images. Denoising images in the input sequence of rendered images includes reducing a likelihood of temporal artifacts among two or more images in the input sequence of rendered images. The computer-implemented method includes generating, by the generative adversarial network, the de-noised rendered output sequence using the input sequence of rendered images. The generative adversarial network includes a generator network trained to generate training denoised sequences of rendered images and a discriminator network trained to classify training denoised sequences of rendered images from the generator network. A classification of a training denoised sequence of rendered images includes a label indicating whether the training denoised sequence of rendered images is a temporally stable sequence of images. The computer-implemented method includes providing, by the electronic gaming device, the de-noised rendered output sequence for output.

Other implementations of this aspect include corresponding systems, apparatus, and computer programs, configured to perform the actions of the methods, encoded on computer storage devices.

These and other implementations can each optionally include one or more of the following features.

In some implementations, receiving the input sequence of rendered images includes receiving, from the renderer of the electronic gaming device, one or more auxiliary buffers corresponding to images in the input sequence of rendered images, each of the one or more auxiliary buffers includes image data for the input sequence of rendered images.

In some implementations, the de-noised rendered output sequence is generated based on the input sequence of rendered images and at least one auxiliary buffer from one or more the auxiliary buffers. In some implementations, an auxiliary buffer from the one or more auxiliary buffers includes a data structure storing the image data, the image data representing simulated visual properties of the one or more objects in the virtual environment. In some implementations, the data structure is an image map to store the image data. In some implementations, the image data represents one of more of (i) depth, (ii) surface orientation, (iii) albedo, (iv) ambient occlusion, (v) specular reflection intensity, (vi) shadow intensity, (vii) light emission, (viii) motion, (ix) surface normal vectors, (x) surface roughness, for at least one of the one or more objects in the virtual environment.

In some implementations, the computer-implemented method further includes providing the de-noised rendered output sequence to a predictive network trained to generate predicted normal vectors for objects in the virtual environment. The predictive network is trained by reducing a difference between the predicted normal vectors and input normal vectors for objects in the input sequence of rendered images. The input normal vectors are generated by the renderer of the electronic gaming device. The computer-implemented method includes generating, by the predictive network and based on the de-noised rendered output sequence, the predicted normal vectors. The computer-implemented method includes updating one or more parameters of the generator network based on a comparison of the predicted normal vectors and the input normal vectors for the objects in the input sequence of rendered images. In some implementations, updating the one or more parameters of the generator network includes determining an error between the predicted normal vectors and the input normal vectors is above a threshold value.

In some implementations, the computer-implemented method, the generator network is trained to generate training de-noised auxiliary buffer data and the discriminator network is trained to classify training de-noised auxiliary buffer data from the generator network. A classification of the training de-noised auxiliary buffer data includes a second label indicating whether the training de-noised auxiliary buffer data is temporally stable.

In some implementations, generating the de-noised rendered output sequence includes generating, by the generative adversarial network and using the input sequence of rendered images, a first de-noised output sequence. Generating the de-noised rendered output sequence includes extracting features from one or more auxiliary buffers for the input sequence of rendered images and combining the first de-noised output sequence with the extracted features from the one or more auxiliary buffers for the input sequence of rendered images to generate the de-noised rendered output sequence.

In some implementations, the label indicating that the training denoised sequence of rendered images is a temporally stable sequence of images includes determining that the training denoised sequence of rendered images has a same or fewer number of temporal artifacts compared to a ground truth denoised sequence of rendered images. The ground truth denoised sequence of rendered images being rendered using full path tracing.

In some implementations, providing the de-noised rendered output sequence for output includes writing the de-noised rendered output sequence into a framebuffer of the electronic gaming device and transmitting, by the electronic gaming device and using the framebuffer, video output to a display device connected to the electronic gaming device.

The present disclosure also provides a computer-implemented system includes at least one processor and a memory storing instructions that, when executed by the at least one processor, cause the at least one processor to perform operations.

In general, innovative aspects of the subject matter described in this specification can include actions of a computer-implemented system. The computer-implemented system includes at least one processor; and a memory storing instructions that, when executed by the at least one processor, cause the at least one processor to perform operations. The operations include receiving an input sequence of rendered images representing a visual representation of one or more objects in a virtual environment. The input sequence of rendered images is generated by a renderer of an electronic gaming device. The operations include providing the input sequence of rendered images to a generative adversarial network. The generative adversarial network is trained to generate a de-noised rendered output sequence by de-noising images in the input sequence of rendered images. Denoising images in the input sequence of rendered images includes reducing a likelihood of temporal artifacts among two or more images in the input sequence of rendered images. The operations include generating, by the generative adversarial network, the de-noised rendered output sequence using the input sequence of rendered images. The generative adversarial network includes a generator network trained to generate training denoised sequences of rendered images and a discriminator network trained to classify training denoised sequences of rendered images from the generator network. A classification of a training denoised sequence of rendered images includes a label indicating whether the training denoised sequence of rendered images is a temporally stable sequence of images. The operations include providing, by the electronic gaming device, the de-noised rendered output sequence for output.

The present disclosure also provides a non-transitory computer-readable storage medium coupled to one or more processors and having instructions stored thereon which, when executed by the one or more processors, cause the one or more processors to perform operations in accordance with implementations provided herein.

In general, innovative aspects of the subject matter described in this specification can include actions of one or more non-transitory computer readable media storing instructions. The instructions, when executed by at least one processor, cause the at least one processor to perform operations. The operations include receiving an input sequence of rendered images representing a visual representation of one or more objects in a virtual environment. The input sequence of rendered images is generated by a renderer of an electronic gaming device. The operations include providing the input sequence of rendered images to a generative adversarial network. The generative adversarial network is trained to generate a de-noised rendered output sequence by de-noising images in the input sequence of rendered images. Denoising images in the input sequence of rendered images includes reducing a likelihood of temporal artifacts among two or more images in the input sequence of rendered images. The operations include generating, by the generative adversarial network, the de-noised rendered output sequence using the input sequence of rendered images. The generative adversarial network includes a generator network trained to generate training denoised sequences of rendered images and a discriminator network trained to classify training denoised sequences of rendered images from the generator network. A classification of a training denoised sequence of rendered images includes a label indicating whether the training denoised sequence of rendered images is a temporally stable sequence of images. The operations include providing, by the electronic gaming device, the de-noised rendered output sequence for output.

It is appreciated that the methods and systems in accordance with the present disclosure can include any combination of the aspects and features described herein. That is, methods and systems in accordance with the present disclosure are not limited to the combinations of aspects and features specifically described herein, but also include any combination of the aspects and features provided.

Particular implementations of the subject matter described in this specification can be executed so as to realize one or more of the following advantages. The disclosed technology reduces the number and/or likelihood of temporal artifacts in a rendered sequence of images, thereby improving the output quality of video games when provided for display, e.g., on a television or a monitor. The disclosed technology need not be limited to video games, as the disclosed technology can provide de-noising and temporal stabilizing for other applications such as visual effects, animation, VR/AR, and other domains where simulation can be used for modeling the behavior of objects and light, e.g., academic research and industry. The disclosed technology does not rely on re-projecting data from previous frames as in temporal accumulation approaches, and thus does not introduce ghosting artifacts and temporal lack that would otherwise occur in scenarios with disocclusions (e.g., an object appearing and/or disappearing in an image), changing illumination, and/or fast motion. As another advantage, the disclosed technology provides improved handling of rendered images with dynamic lighting, such as scenarios where the lighting in a rendered scene rapidly changes. Thus, the disclosed technology increases the likelihood of rendering images without artifacts, such as smearing and flickering because the GAN does not rely on temporal accumulation for illumination in a scene. The discriminator of the disclosed GAN can also provide built-in temporal awareness in de-noising images, as the discriminator can be trained to learn temporal consistency, e.g., temporal stability across multiple images, and thus provide a generalized model for de-noising unseen motion or dynamic scenes.

The disclosed technology can also utilize a predictive network for training the generator of the GAN to maintain or improve geometric fidelity across multiple rendered images, thereby reducing flickering in textures, edges, and other features of the rendered scene. For instance, the geometric properties such as vectors perpendicular to surfaces of 3D objects in a scene (also referred to as "normals") can be encoded in the rendered images representing the rendered scene. The normals can be compared among a noisy input image sequence for the generator and the de-noised output image sequence. In this way, the generator is trained to de-noise the images with a lower likelihood of inadvertently modifying the normals of objects rendered in the scene.

The disclosed GAN includes a disentangled network design that provides modularity, in that the features of rendered images can be separated into streams for parallel processing. This is particularly advantageous as some features, such as color, are more likely to have noise (and/or larger amounts of noise) as well as less instability, compared to other features in the rendered images. For example, the disclosed GAN can process color data from a stream of rendered images separately from auxiliary data (such as surface reflective properties) of the rendered images that is more likely to be stable than the color data. The color data and the auxiliary data can be processed as two separate streams of inputs by the generator and processed independently from one another to provide a de-noised color stream of images and a de-noised auxiliary stream of images. The de-noised color stream can be combined with the de-noised auxiliary stream to form a combined de-noised generator output that provides improvements in targeted de-noising, e.g., applying de-noising to features that are more likely to include noise. In this way, the disclosed technology provides improved computational efficiency for rendering computer-generated images, by efficiently allocating resources used for de-noising to the features of rendered images that are more likely to contain noise.

The disclosed technology also provides an extensible framework for rendering images by providing an approach that is not based on temporal accumulation. In this way, the disclosed technology allows for hybrid approaches for image rendering. For example, features of rendered images that are more likely to be stable can be processed by temporal accumulation, while features where temporal accumulation would be likely to introduce artifacts (e.g., sources of temporal instability) can be processed by the disclosed GAN. The associated computing devices, systems, platforms, and engines for rendering images in video games can enabled by this technology to achieve a balance between real-time performance and visual quality. As another advantage, the training for the GAN and/or the predictive network can be performed offline by the electronic gaming device itself, but also by a computing platform connected to the electronic gaming device. In this way, the disclosed technology provides improved visual quality for immersive video gameplay, while simultaneously providing the photorealistic effects of high-fidelity rendering techniques like full ray tracing at a fraction of the computational resources demand that would otherwise be demanded.

The details of one or more implementations of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIGS. 1A and 1B depict diagrams representative of techniques for real-time rendering of images.
FIGS. 2A to 2E depict diagrams and images representative of noise introduced in real-time rendering of images.
FIG. 3A depicts a diagram representative of a real-time rendering with de-noising using a generative adversarial network.
FIG. 3B is a block diagram of the generative adversarial network of FIG. 3A.
FIG. 4 is a flow diagram of an example process in accordance with implementations of the present disclosure.
FIG. 5 shows an example of a computing device 500 and associated accessories that can be employed to execute implementations of the present disclosure.

Like reference numbers and designations in the various drawings indicate like elements.

### DETAILED DESCRIPTION

The technology of this patent application is directed to real-time rendering of digital images temporally stable neural denoising in Monte Carlo rendering without temporal accumulation. More particularly, the technology of this patent application is a generative adversarial network (GAN) that provides temporally stable denoising for rendering image sequences that avoids or minimizes reliance on temporal accumulation. The technology is presented to enable any person skilled in the art to make and use the disclosed subject matter in the context of one or more particular implementations. Various modifications, alterations, and permutations of the disclosed implementations can be made and will be readily apparent to those of ordinary skill in the art, and the general principles defined can be applied to other implementations and applications, without departing from the scope of the present disclosure. In some instances, one or more technical details that are unnecessary to obtain an understanding of the described subject matter and that are within the skill of one of ordinary skill in the art may be omitted so as to not obscure one or more described implementations. The present disclosure is not intended to be limited to the described or illustrated implementations, but to be accorded the widest scope consistent with the described principles and features.

As described further in this specification, some rendering techniques such as Monte Carlo rendering utilize stochastic sampling to estimate the color or radiance of each pixel in the image. Although Monte Carlo rendering and other types of stochastic ray tracing-based rendering can produce streams of photorealistic images for video output by computing devices, their stochastic nature introduces noise, e.g., particularly at low sample counts. For real-time applications such video gaming, denoising is an approach that can be used maintain visual fidelity and performance. Other real-time rendering applications include visual effects and animation, VR/AR, and other areas where real-time simulation of objects may be desired, e.g., in industry and academic research. Some approaches for denoising in real-time rendering rely on temporal accumulation, where data from previous frames is warped into the current frame using motion vectors. In other words, temporal accumulation blends information from multiple previous frames over time to enhance detail, e.g., lighting, and reduce flickering for dynamic scenes in video gameplay.

While effective in achieving temporal stability, temporal accumulation can introduce temporal artifacts, such as ghosting, trailing, and temporal lag. These artifacts become especially apparent in situations involving disocclusion, rapidly changing illumination, or fast motion, where incorrect accumulation can cause light smearing, delayed shadow responses, or the appearance of trailing object silhouettes. These artifacts can degrade visual quality and immersive quality of a game displayed by an electronic gaming device. Degradation in video quality output from electronic gaming devices can obscure important gameplay elements in a video game, increase the difficulty for a player to focus on objects in the game to complete objectives, and result in a number of other effects on the player such as disorientation and fatigue. Thus, there is a demand for denoising techniques that do not rely on temporal accumulation to achieve photorealistic gameplay while simultaneously achieving lower computational demand than computationally expensive high-fidelity techniques, such as full path tracing.

To provide context for the subject matter of the present disclosure, real-time rendering includes the relatively rapid generation of digital images (referred to as "images" herein). For example, real-time rendering can be used to generate images as frames of videos at frame rates of 30 frames per second (FPS), 60 FPS, or higher. For certain use cases, such as video games, virtual reality (VR)/augmented reality (AR), simulations and the like, graphics are required to be rendered rapidly (e.g., ≥ 60 FPS), such as in response to user input. Using video games as a non-limiting example, real-time rendering enables players to see and interact with a simulated/virtual game world that updates in real-time in response to player input (e.g., moving a character, changing a camera angle). The goal of real-time rendering is to produce visually convincing images at high speed. However, real-time rendering must balance visual quality with computational performance in terms of being achievable under realistic hardware constraints (e.g., processors and memory available in consumer gaming consoles, VR/AR headsets, and the like).

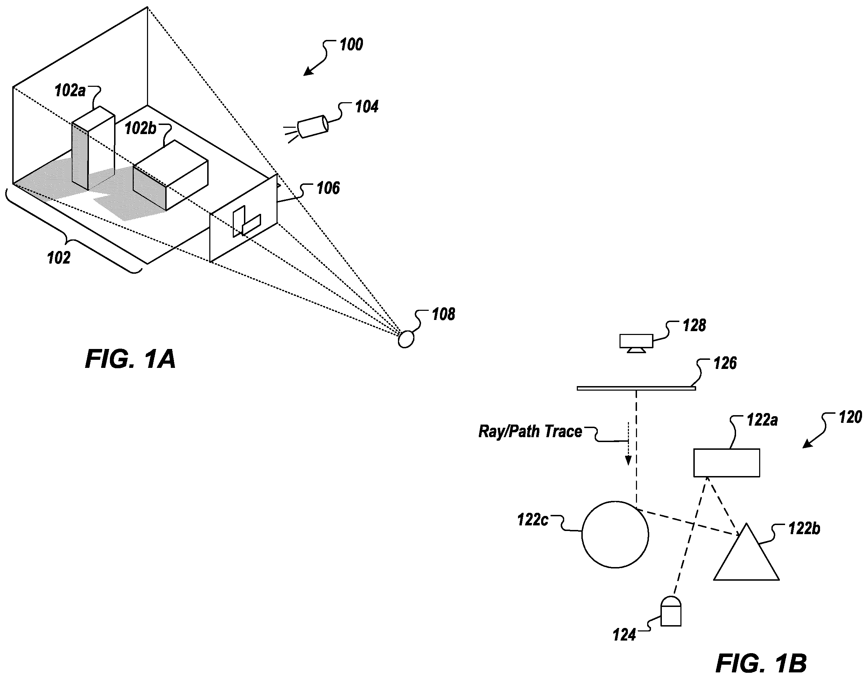

Real-time rendering of images is discussed in further detail herein with reference to FIGS. 1A and 1B, which depict schematic diagrams representative of techniques for real-time rendering of images. As used herein, the term real-time refers to execution of operations (e.g., processing data, transmitting data) without intentional delay given processing limitations of a system, the time required to accurately obtain data, store data, and the like, and any rate of change of data. The term "real-time," "real time," "realtime," "real (fast) time (RFT)," "near(ly) real-time (NRT)," "quasi real-time," or similar terms (as understood by one of ordinary skill in the art), means that an action and a response are temporally proximate such that an individual perceives the action and the response occurring substantially simultaneously. For example, the time difference for a response to display (or for an initiation of a display) of data following the individual's action to access the data can be less than 1 millisecond (ms), less than 1 second (s), or less than 5 s. While the requested data need not be displayed (or initiated for display) instantaneously, it is displayed (or initiated for display) without any intentional delay, taking into account processing limitations of a described computing system and time required to, for example, gather, accurately measure, analyze, process, store, or transmit the data.

With particular reference to FIG. 1A, an environment 100 includes a multi-dimensional model 102 (a three-dimensional (3D) model) representative of a scene (e.g., a scene within a game world). For example, the multi-dimensional model 102 can be generated by an application (e.g., a video game application) and depicts objects 102a, 102b and represents interactions with and/or between the objects 102a, 102b within the scene. A light source 104 casts light on the scene that affects the appearance of the objects 102a, 102b within the scene. Although a single light source 104 is depicted, it is contemplated that multiple light sources can be provided. In the example of FIG. 1A, the light results in the objects 102a, 102b casting respective shadows.

With regard to real-time rendering, an image displayed within an image plane 106 is generated from the perspective of a camera 108. The image depicts a two-dimensional (2D) representation of the 3D scene. The image can be, for example, a frame of a series of frames to depict animation within the scene. That is, the image is regenerated at a frame rate (e.g., ≥ 60 FPS) to depict changes in the scene over time (e.g., as the objects 102a, 102b interact with each other, as users interact with the objects, as the position of the camera 108 changes). The image is provided as a set of pixels (e.g., a 4K image (3840 x 2160 pixels), a 1080p image (1920 x 1080 pixels), a 1440p image (2560 x 1440 pixels). Each pixel is associated with a set of data that describes characteristics of subject matter that is depicted in the image (e.g., the objects 102a, 102b). Example data in the set of data can include color data (e.g., Red, Green, Blue, Alpha (RGBA) data), depth data (e.g., Z-buffer), stencil data, normal vector (surface direction), and the like.

With reference to FIG. 1B, techniques referred to as ray tracing and path tracing will be described. In general, ray tracing can be described as the operation of tracing a ray and finding its first intersection point (referred to as hit) with the geometry within the scene. Path tracing extends additional rays from hits (e.g., from the first hit determined using ray tracing) to effectively bounce around the geometry to define a light path. For clarity, the term path tracing is used for the following discussion.

Path tracing can be used for real-time rendering of high quality (e.g., photorealistic) images by simulating the manner in which light interacts with objects in a scene. FIG. 1B depicts an environment 120 representative of a scene having objects 122a, 122b, 122c. A light source 124 emits light on the scene and a camera 128 generates images of the scene. An image can be represented in an image plane 126.

Path tracing performs pixel shading to simulate global illumination to account for more complex interactions and to improve image realism. Path tracing, which includes multiple bounces within the scene along paths, simulates complex light paths including indirect lighting, color bleeding, caustics, and the like. For path tracing, each pixel requires numerous rays (tens, hundreds, thousands) to be considered in order to provide a noise-free, accurate image. This is computationally expensive and too slow for real-time rendering under realistic hardware constraints, e.g., consoles, handheld consoles, personal computers (laptops, desktops), tablets, smartphones, and the like.

For each pixel, the rendering equation is approximated to determine the total outgoing light from the surface represented in the respective pixel as a function of emitted light, incoming light, material properties (e.g., mirror, glossy, matte), and geometric properties (e.g., Lambert Cosine Law). Due to the complexity of the rendering equation, which is a recursive equation, particularly when accounting for indirect lighting and multiple light-surface interactions, a direct analytical solution is not feasible.

To address the computational expense of techniques such as ray tracing and path tracing and the infeasibility of calculating the rendering equation, Monte Carlo rendering has become a widely adopted technique. Monte Carlo rendering produces photorealistic images by simulating the physical behavior of light. At a high-level, Monte Carlo rendering uses probability and randomness to approximate lighting values that would be too complex and/or too slow to compute under realistic hardware constraints.

Specifically, Monte Carlo rendering utilizes stochastic sampling to approximate solutions to the rendering equation, discussed above, which models the transport of light in a virtual scene. Monte Carlo rendering employs random sampling to estimate the integral components of light transport, where light contribution is computed based on probabilistic sampling, using functions such as the bidirectional reflectance distribution function (BRDF) to evaluate the surface response. The results from the sampled paths are averaged to estimate the color or radiance of each pixel in the image. As more samples are taken, the estimate converges toward an accurate solution, enabling realistic simulation of lighting phenomena such as soft shadows, indirect illumination, and caustics.

In achieving convergence, Monte Carlo rendering limits the number of paths (rays cast) per pixel, where each path is considered a sample. Accordingly, a metric, referred to as samples per pixel (SPP), is used to limit a number of paths (rays cast) processed for each pixel. The higher the SPP, the more computationally intensive (and, as a result, slower) the processing and the better the accuracy of the rendered image. The lower the SPP, the more computationally efficient (and, as a result, faster) the processing, but accuracy is lost. Further, due to its stochastic nature, Monte Carlo rendering introduces noise, which increases with lower SPPs. The more noise, the lower the visual fidelity (accuracy) of the rendered image.

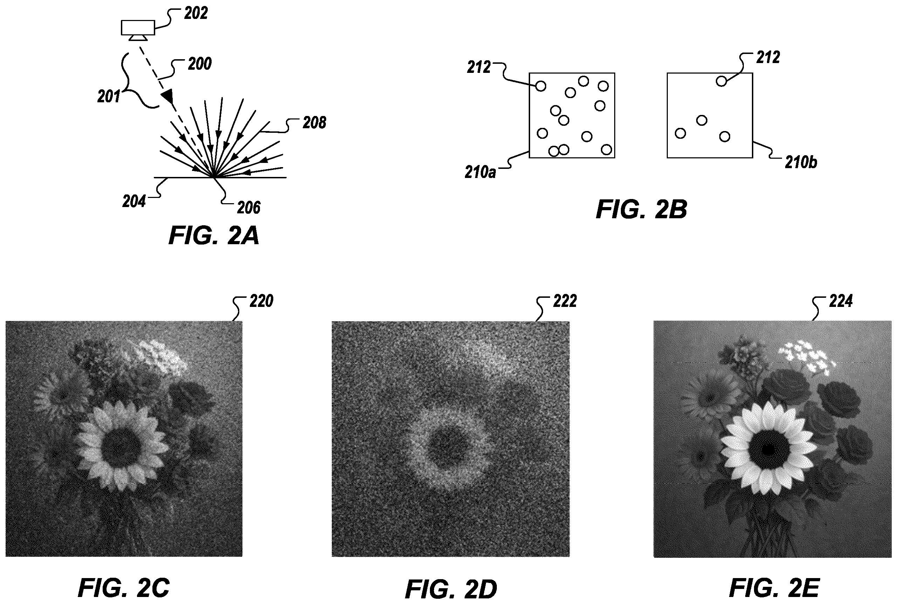

FIGS. 2A to 2E depict diagrams and images representative of noise introduced in real-time rendering of images. In the example of FIG. 2A, for a pixel, a path 200 of a ray 201 is cast from a camera 202 and contacts a surface 204 at a point 206. Here, the surface 204 represents a surface of an object within a scene and the point 206 is the point, from which the ray is reflected to the camera 202 along the path 200. As discussed above, the rendering equation is solved for the ray to determine the outgoing light of the rays toward the camera 202. As discussed above this, among other properties, is a function of incoming light represented as incoming rays 208 (e.g., from direct light source(s), from indirect light source(s)). Ray 201 is also an example of an incoming ray, such as incoming rays 208. Rays such as ray 201 and incoming rays 208 can be one of tens, hundreds, thousands, or more rays for the pixel that could be reflected from the surface 204 at various angles. Ideally, outgoing light for the pixel would be calculated over all of the rays with a given outgoing light for each ray. However, this is computationally infeasible, particularly under realistic hardware constraints.

To address this, and as discussed above, Monte Carlo rendering randomly samples rays (paths) to provide a sample of rays that the rendering equation is solved over. That is, Monte Carlo rendering is performed using a selected SPP to limit the number of rays (paths) considered. To further improve computational efficiency, the number of incoming rays 208 considered in the calculations can be limited. For example, techniques, such as importance sampling and multiple importance sampling can be used to limit the number of incoming rays 208 used for the calculations.

FIG. 2B depicts a pixel 210a and a pixel 210b, each pixel 210a, 210b having multiple samples 212, each sample indicating a respective ray that contributes an outgoing light value to the total outgoing light value determined for the respective pixel. In the example of FIG. 2B, the pixel 210a has a first SPP (e.g., 12 SPP) and the pixel 210b has a second SPP (e.g., 4 SPP) that is lower than the first SPP. As such, the first SPP results in a noisy image that has a higher fidelity than a noisy image resulting from the second SPP. For example, an image 220 of FIG. 2C can represent a noisy image that is generated using the first SPP and an image 222 of FIG. 2D can represent a noisy image that is generated using the second SPP. As represented in FIGS. 2C and 2D, lower SPPs result in a higher amount of noise. As such, while lower SPPs are more computationally efficient, they result in images having higher amounts of noise and thus, less accurate (lower fidelity) images.

For real-time rendering applications, denoising is used to maintain visual fidelity (accuracy) and computational performance. At a high-level, denoising includes applying a denoiser to noisy images to smooth out the noise and produce a cleaner, more visually accurate image (i.e., an output image that is less noisy than an input image). Denoising can include spatial filtering based on neighboring pixels and temporal filtering based on pixels from previous frames. In some cases, denoising can include using artificial intelligence (AI) / machine learning (ML) models that are trained to reconstruct higher quality images from lower quality, noisy images. With reference to FIG. 2D, an image 224 can be provided as a denoised image of one of the images 220, 222 of FIGS. 2C and 2D, respectively.

In Monte Carlo rendering, denoising can be implemented in various ways. While convolutional neural networks (CNNs) are commonly used for Monte Carlo rendering, Vision Transformers (ViTs) have recently shown strong performance in image understanding and are being applied to Monte Carlo rendering pipelines. A ViT is a transformer-based neural network adapted for image processing tasks, such as denoising and adaptive sampling in Monte Carlo rendering. A ViT operates on noisy, low SPP rendered images and can utilize auxiliary data, such as surface normals, depth, and albedo. The input image can be divided, for example, into fixed-size patches, which are processed as tokens (e.g., using self-attention) to capture spatial and contextual relationships. The output of the ViT is a denoised image approximating the quality of a high SPP render. A ViT can also support adaptive sampling by identifying regions requiring additional samples, thereby improving efficiency and image fidelity, while reducing computational cost.

In view of the foregoing, implementations of the present disclosure provide a GAN architecture and training approach that achieves temporal stability inherently through iterative training of the generator and discriminator networks of the GAN, e.g., training to minimize or maximize an objective function for each of the generator and the discriminator. As an example, training the discriminator can include maximizing a classification objective function to increase a likelihood of the discriminator correctly distinguishing between synthetic outputs from the generator and temporally stable training examples. The discriminator can be trained to improve its ability to distinguish whether a sequence is temporally stable, e.g., containing very few or zero artifacts, or unstable, e.g., containing a number of temporal artifacts. Similarly, training the generator can include maximizing a generating objective function to increase a likelihood of the generator generating a synthetic output that mimics a temporally stable training example (such as those generated by full path ray tracing).

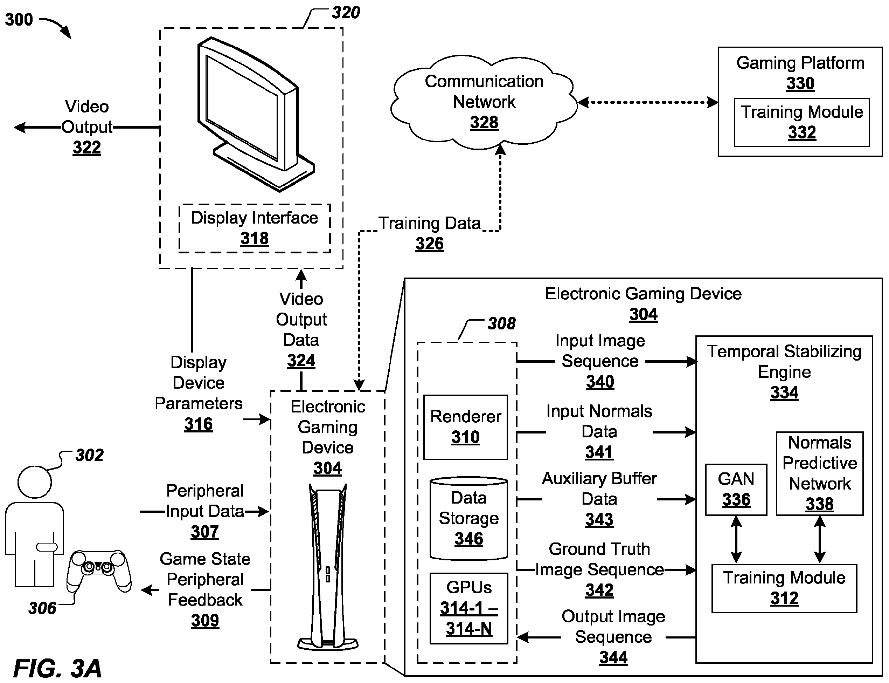

FIG. 3A depicts a diagram 300 representative of a real-time rendering with de-noising using a generative adversarial network 336 (also referred to as "GAN 336"). The diagram 300 illustrates an example gaming environment with a player 302 interacting with an electronic gaming device 304 (also referred to as "gaming device 304") through a peripheral device 306 that is connected to the gaming device 304. The gaming device can be connected to a display device 320, which can be any type of display device, e.g., television or monitor, to provide video output of video gameplay from the gaming device 304 in the form of video output 322.

As an example, the player 302 provides an input (such as by pressing buttons on a button pad, tilting analog direction sticks, or providing a voice input) to the peripheral device 306 and the peripheral device 306 transmits the user input as peripheral input data 307, e.g., data indicative of the player input to the electronic gaming device 304. The gaming device 304 can provide a number of different outputs based on the peripheral input data 307, such as outputs related to a game state of a video game played on the gaming device 304. For example, the input from the player 302 provided through the peripheral device 306 can indicate movement of a character in a video game rendered by the gaming device 304.

The gaming device 304 can generate streams of image renderings and provide the rendered images to the display device 320 in the form of video output data 324, in which the display device 320 can display as video output 322 to the player 302. The video output data 324 can be a de-noised sequence of images that is temporally stable, e.g., with relatively few or zero temporal artifacts. The gaming device 304 includes a rendering engine 308 for rendering, de-noising, and temporally stabilizing sequences of images for video output, e.g., by the display device 320.

The gaming device 304 need not be limited to generating data for video output, as the gaming device 304 can receive peripheral input data 307 and provide haptic feedback (such as vibrations or other tactile sensations) to the player 302 through the peripheral device 306. For example, the gaming device 304 can generate and transmit game state peripheral feedback 309 to the peripheral device 306, in which the game state peripheral feedback 309 include signals for the peripheral device 306 to use to apply haptic feedback (such as intensity, duration, type, and other parameters) to the player 302.

In some implementations, the display device 320 includes a display interface 318 to connect the display device 320 to the gaming device 304. The gaming device 304 can generate video output data 324 for the display interface 318 and the display interface 318 is configured to stream the rendered images in the video output data 324 as video output 322. The display interface 318 can include a type of connector (such as High-Definition Multi-Media or DisplayPort) and transmission protocols for transmitting audio and/or video data through the display device 320 (e.g., Transition-Minimized Differential Signaling, among other types of wired or wireless communication protocols).

In some implementations, the gaming device 304 receives display device parameters 316, e.g., from the display device 320 and/or through the display interface 318, and generates the video output data 324 based on the display device parameters 316. The display device parameters 316 can include resolution, refresh rate, and configurable settings for capabilities (such as high dynamic range, variable refresh rate, audio return channels, etc.) For example, the gaming device 304 can render images and generate video output data 324 according to a resolution (e.g., 4K UltraHigh Definition at a dimension of 3840 pixels × 2160 pixels) at a particular refresh rate ( e.g., 60 frames per second) with high dynamic range (e.g., increased contrast, brightness, and color range) as compared to a standard dynamic range.

Referring to the rendering engine 308 of the gaming device 304, the rendering engine 308 is coupled to a temporal stabilizing engine 334. The rendering engine 308 includes a renderer 310, data storage 346, and graphics processing units (GPUs) 314-1 - 314-N (collectively referred to as "GPUs 314"). The renderer 310 can be a rendering engine configured to generate visual representations of the virtual environment encapsulated in video gameplay. For example, the renderer 310 can generate sequences of images for display to represent multi-dimensional gaming environments (e.g., a 3D open-world environment) in a sequence of images having a smaller number of dimensions than the multi-dimensional gaming environment. As described in reference to FIGS. 1A, 1B, and 2A through 2E, the renderer 310 can be configured to apply Monte Carlo rendering, among other types of graphics rendering techniques.

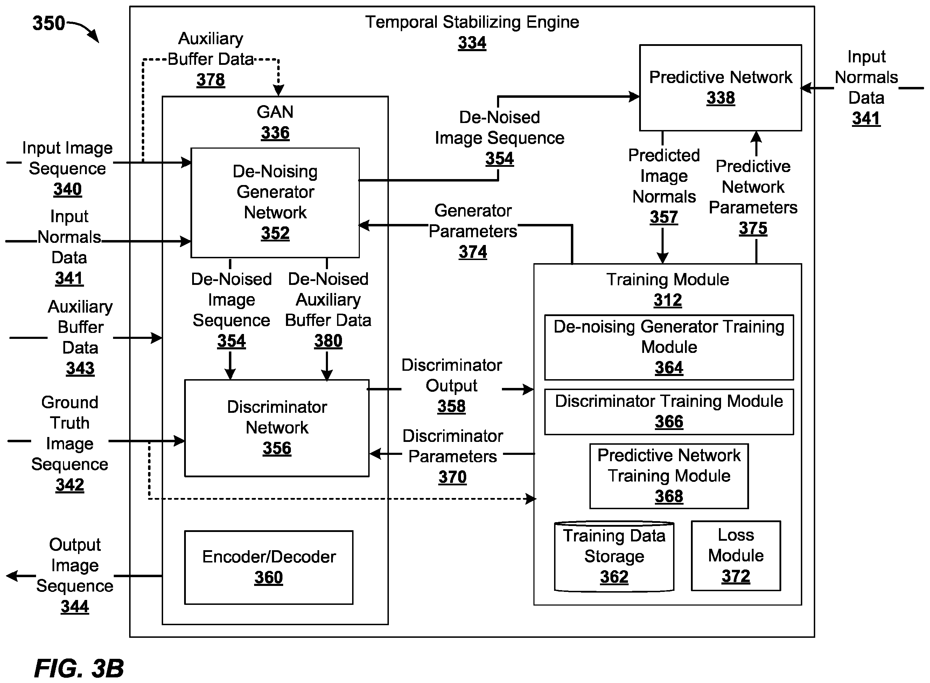

The renderer 310 can utilize the data storage 346, e.g., to store and retrieve data for generating images, and the GPUs 314, e.g., to perform computational tasks using the data for generating the images, to generate an input image sequence 340. The GPUs 314 can be used to perform parallel computing operations for generating input image sequences 340. The renderer 310 can provide the input image sequence 340 to the temporal stabilizing engine 334 for de-noising and temporal stabilization to improve visual clarity and remove temporal artifacts, respectively. The temporal stabilizing engine 334 includes a GAN 336 to process the input image sequence 340 and generate an output image sequence 344 that is de-noised and temporally stable. The temporal stabilizing engine 334 also includes predictive network 338 trained to evaluate de-noising and temporal stability of sequences generated by the GAN 336 to ensure surface reflection information is maintained after the de-noising process. The temporal stabilizing engine 334 also includes a training module 312 to train networks (such as the generator network and/or the discriminator network of the GAN 336, and/or the predictive network 338) as described in reference to FIG. 3B below.

Referring to the input image sequence 340, the render 310 can generate a sequence of images that capture a virtual environment, e.g., a game state of a video game, at one or more time instances. Each image in the input image sequence 340 can capture the virtual environment at a different respective time instance another image in the sequence of images.

The input image sequence 340 can be a data structure representing a sequence of images, each image in the sequence of images including color data for the virtual environment at the respective time instance for the image. In some implementations, the input image sequence 340 can also include auxiliary buffers, which provide data indicative of other visual characteristics and features of the virtual environment. For example, the input image sequence 340 can include auxiliary buffers representing depth, surface orientation, albedo, ambient occlusion, ambient occlusion, specular reflection intensity, shadow intensity, light emission, motion, and other visual characteristics of the virtual environment captured in the images.

As discussed above in reference to FIGS. 1A, 1B, and 2A through 2E, Monte Carlo and similar types of rendering rely on stochastic processes and sampling that introduce noise, which can consequently result in temporal artifacts when using de-noising techniques (such as temporal accumulation). The GAN 336 can be trained to process the input image sequence 340 from the rendering engine 308 to generate an output image sequence 344 with less noise and improved temporal stability compared to the input image sequence 340. The output image sequence 344 can also be a sequence of images representing the virtual environment in a video game at different time instances but provides improved visual clarity and fewer temporal artifacts in video output, e.g., video output 322, compared to the input image sequence 340.

In some implementations, the renderer 310 can also provide a set of input normals data 341 to the temporal stabilizing engine 334, the set of input normals data 341 corresponding to the input image sequence 340. The input normals data 341 can be data representing vectors perpendicular to surfaces of objects in the virtual environment. As an example, the input normals data 341 can include face normals, e.g., a perpendicular vector to an entire polygon, vertex normals, e.g., averaged normal from all faces connected to a vertex, or a normal map, e.g., a texture that stores normal vectors on a per-pixel basis to simulate surface details. The input normals data 341 may also be referred to as an example of an auxiliary buffer for the input image sequence 340.

In some implementations, the render 310 provides auxiliary buffer data 343 to the temporal stabilizing engine 334, the auxiliary buffer data 343 corresponding to the input image sequence 340. The auxiliary buffer data 343 can include data that is auxiliary to color of objects representing in the input image sequence 340. For example, the input image sequence 340 can include a sequence of images, each image includes pixel values representing color, e.g., color data. The input normals data 341 can be referred to as an example of auxiliary buffer data 343, but other examples can include depth, surface orientation, albedo such as diffuse albedo and/or surface albedo, ambient occlusion, specular reflection intensity, shadow intensity, light emission, motion vectors, etc. In some implementations, the auxiliary buffer is one or more image layers for an input sequence of images generated by the renderer 310. The one or more image layers for the auxiliary buffer data 343 provide different types of data per pixel for each image in the input sequence of images. In some implementations, the auxiliary buffer data 343 can be provided to the temporal stabilizing engine 334 as part of the input image sequence 340.

In some implementations, the GAN 336 can be trained to identify one or more different combinations of auxiliary buffers for de-noising image sequences with temporal stability. For example, the GAN 336 can be trained to determine that a combination of color data from the input image sequence and auxiliary buffers for surface albedo, normal vectors, depth, and surface roughness can provide temporally stable de-noised image sequences, e.g., with few or zero temporal artifacts.

In some implementations and in addition to including normal vectors for objects in the virtual environment, the input normals data 341 can include data indicative of surface reflections of objects in the virtual environment, as well as the surface reflection properties of objects in the virtual environment. The input normals data 340 can be provided as a separate input from the input image sequence 340.

The rendering engine 308 can also provide a ground truth image sequence 342, which can be an example of training data used by the training module 312 to train the GAN 336 and/or predictive network 338. The ground truth image sequence 342 can be a sequence of training images that is rendered using techniques, e.g., such as full-path ray tracing, that includes little to zero noise and/or temporal artifacts to serve as a training example of de-noised and temporally stable rendered images.

The gaming device 304 can also be connected to a gaming platform 330 by a communication network 328 for training the GAN 336 of the temporal stabilizing engine 334. The communication network 328 can be the Internet or any type of communication to transmit and receive data between the gaming device 304 and the gaming platform 330. The gaming platform 330 can include a training module 332 that is similar to the training module 312 of the temporal stabilizing engine 334. In this way, the GAN 336 can be trained by servers, computing systems, and other devices that are part of or connected to the gaming platform 330. This can allow for offline training of the GAN 336 by devices external to the gaming device 304, e.g., to distribute the consumption of computing resources across multiple devices rather than relying on training of the GAN by the gaming device 304 alone. The communication network 328 can allow for the transmit and receipt of training data 326 between the gaming platform 330 and the gaming device 304. The training data 326 can include parameters for the generator network, the discriminator, the prediction network, or some combination thereof, for improving the overall performance of the GAN 336.

FIG. 3B is a block diagram 350 of the GAN 336 of FIG. 3A. The diagram 350 shows that the GAN 336 including a de-noising generator network 352 (also referred to as "generator 352") configured to generate de-noise temporally stable images in an input image sequence 340, by learning how to generate "fake" or synthetic rendered images that appear similar to images generated by full ray tracing, e.g., with less noise and fewer temporal artifacts, and without having to apply temporal accumulation techniques between different image renderings for different time instances. The generator 352 can generate synthetic outputs, such as de-noised image sequence 354, that is a de-noised and temporally stable sequence of rendered images based on the images in the input image sequence 340.

The GAN 336 includes a discriminator network 356 (also referred to as "discriminator 356") that is configured to discriminate among de-noised image sequences, such as the de-noised image sequences generated by the generator 352. The discriminator 356 can also discriminate based on the ground truth image sequence 342, representing a de-noised temporally stable image sequence. The discriminator 356 is trained to generate classification labels indicating whether a denoised sequence of rendered images is temporally stable, e.g., a temporally stable sequence of images with fewer or zero temporal artifacts than a stochastically generated sequence without any de-noising or temporal stabilization techniques applied.

By training the generator 352 and the discriminator 356 in an adversarial manner through a number of training steps and iterations, the GAN 336 can learn to generate temporally stable de-noised image sequences rendered from stochastic rendering techniques like Monte Carlo rendering. The generator 352 and the discriminator 256 can be trained to improve the synthetic output generation performed by the generator 352 and the temporal stability classification by the discriminator 356, respectively. In particular, the temporal stabilizing engine 334 includes the training module 312 for training the GAN 336.

For example, improved performance by the generator 352 can appear as generating denoised image sequences that are incorrectly classified as "real" (e.g., a temporally stable) or "fake" (e.g., temporally unstable) by the discriminator 356. An improved performance by the discriminator 356 can appear as successfully discriminating the de-noised sequences from the generator 352 from de-noised image sequences that are found in the ground truth image sequence 342, e.g., generated by full ray tracing. In this way, the generator 352 of the GAN 336 can improve its ability to generate temporally stable de-noised image sequences that have a substantial likelihood of being a ground truth temporally stable de-noised image sequence for a sequence of images generated by a rendering engine, such as rendering engine 308 configured to apply Monte Carlo rendering.

Although FIG. 3A depicts the GAN 336 having a single generator 352 and a single discriminator 356, the GAN 336 can include multiple generators 352 and multiple discriminators 356. In some implementations, having multiple discriminators can provide improved discrimination of outputs, e.g., image sequences, generated by the generator 352. The GAN 336 can include multiple discriminators 356, with each discriminator 356 being configured to focus on different types of features associated with different types of temporal artifacts. By having each discriminator focused on different sets of features in the pixel data of the image sequence, multiple discriminators can provide improved training stability and improved quality of de-noised image sequences generated by the generator 352. As another advantage, having multiple discriminators 356 trained on different sets of features associated with different types of temporal artifacts can also increase accuracy by representing a larger portion of a distribution of the temporal artifacts, e.g., compared to a single discriminator 356. By learning how to de-noise images for various types of temporal artifacts that appear from stochastic-based rendering techniques, the multiple discriminators 356 can provide robustness against mode collapse of the generator 352, thereby training the generator 352 to account for a broader range of features when attempting to generate a temporally stable de-noised image sequence that the discriminators 356 can classify as a ground truth temporally stable de-noised image sequence.

In some implementations, the de-noised image sequence 354 can be generated based on the input image sequence 340 that also includes additional data, such as auxiliary buffer data 343 and/or the auxiliary buffer data 378. In some implementations, the auxiliary buffer data 343 and the 378 can include surface reflection data, such as the simulated reflective properties of objects in the visual representation of the gaming environment. In some implementations, the surface reflection data is provided as a separate input to the generator 352, such as by auxiliary buffer data 343 and/or 378.

In some implementations, auxiliary buffer data 378 can also be provided to the GAN 336 as a subset of data from the input image sequence 340 that includes auxiliary buffers. Auxiliary buffer data 378 can be examples of data other than the color data for pixels in the images of the input image sequence 340. For example, the input image sequence 340 can have a number of layers. One of the layers can be color data generated by a stochastic rendering process, such as Monte Carlo rendering. Other layers in the input image sequence 340 can be configured to store the auxiliary buffer data 378. Auxiliary buffer data 378 includes simulated visual properties of the virtual environment represented in the image, including visual properties of the objects in the virtual environment. Examples of auxiliary buffer data 378 can include image layers, maps, or other data structures that include data representing depth, surface orientation, albedo, ambient occlusion, specular reflection intensity, shadow intensity, light emission, or motion. As an example, auxiliary buffer data 378 can include motion vectors representing motion captured in the pixels of different images corresponding to different times in a rendering sequence.

In some implementations, the generator 352 can be configured to generate a de-noised image sequence 354 based on the color data for an input image sequence 340 and separately process the corresponding set of input normals data 341 for the same input image sequence 340 to generate a de-noised image sequence 354.

In some implementations, the generator 352 can be configured to de-noise the auxiliary buffer data 343 and generate de-noised auxiliary buffer data 380. This may be preferably in instances where a particular type of auxiliary buffer includes noise generated in stochastic ray tracing rendering techniques. The de-noised image sequence 354 and the de-noised auxiliary buffer data 380 can be combined into a combined output image sequence 344.

In some implementations, the auxiliary buffer data 343 can be separately processed by the GAN 336, such as by the encoder/decoder 360. The features for the objects representing in the input image sequence 340 can be extracted by the encoder/decoder 360. The GAN 336 can separately process the color data in the input image sequence 340 to de-noise the images and the combine the extracted feature data from the auxiliary buffer data 343. This may be preferably as the color data in the input image sequence 340 may present more noise and temporal instability, whereas some types of auxiliary buffers in the same input image sequence 340 may have less noise and be more temporally stable. The generator 352 can process the color data from the input image sequence 340 as a separate input from the auxiliary buffer data 343, but can also process the auxiliary buffer data 378 in instances where the input image sequence 340 includes color data and auxiliary buffer data. In this way, the generator 352 can avoid introducing noise and temporal instability into features from the auxiliary buffer data 343 or auxiliary buffer data 378 with relatively less noise and more temporal stability, e.g., compared to stochastically generated color data in the input image sequence 340. As discussed in reference to FIG. 3A above, the input normals data 341 may also be referred to an example of auxiliary buffer data.

As another example, the generator 352 separately processes other auxiliary buffers for the input image sequence 340 using the auxiliary buffer data 378. For instance, auxiliary buffers such as normals, depth, and albedo are often temporally stable, whereas the color data in an input image sequence can often be temporally unstable. For auxiliary buffer data 343 and/or 378 that is temporally stable, the GAN 336 can process the color data in the input image sequence 340 to generate a de-noised image sequence 354 that is temporally stable and combine the feature data from the auxiliary buffer data 343 and/or auxiliary buffer data 378 that is temporally stable. In this way, the generator 352 separates unstable features from the relatively stable features to increase robustness to temporal inconsistencies.

In instances where the auxiliary buffer data 343 and/or auxiliary buffer data 378 include noise, e.g., generated from stochastic-based ray tracing rendering techniques, the GAN 336 can process the color data and the auxiliary buffer data 378 in a number of ways. For example and in contrast to processing the visual features represented in the auxiliary buffers and the color data together, the generator 352 can process color data in the input image sequence 340 separately from the auxiliary buffer data 378 and generates two outputs in parallel or sequentially: de-noised image sequence 354 and de-noised auxiliary buffer data 380. The output streams, e.g., de-noised image sequence 354 and de-noised auxiliary buffer data 380, can be combined by the GAN, e.g., as by encoder/decoder 360 to form the output image sequence 344 for output. In this way, the features captured in the auxiliary buffer data can be de-noised and combined with the de-noised color data in the de-noised image sequence 354. By leveraging the auxiliary buffer data 343 and/or auxiliary buffer data 378, the geometric context of objects capturing in the visual features in the auxiliary buffer data can be maintained while the color data is de-noised and temporally stabilized.

In some implementations, the de-noised image sequence 354 from the generator 352 can be provided to the predictive network 338 to determine whether input normals from the original input image sequence for which the de-noised image sequence 354 was generated from maintains the input normals of objects in the rendered image sequence. The predictive network 338 can be trained to predict the input normals of objects represented in the de-noised image sequence 354. In particular, the predictive network 338 can be trained by predictive network training module 368 to reduce a difference between the predicted image normals 357 and the input normals data 341. As an example, the predictive network 338 can be trained to minimize an error between the predicted image normals 357 and the input normals data 341 using one or more gradient descent techniques, such as stochastic gradient descent.

By determining an error between the predicted image normals 357 and the input normals data 341, the predictive network 338 can guide the generator 352 to maintain normals of objects in images when de-noising the images in the input sequence. By training the generator 352 to jointly reconstruct a de-noised image and the normals of objects represented in the input sequence for the de-noised image, the generator can be trained to temporally stabilize de-noised image sequences and stabilize scene structure represented by the sequence of images. As an example, the generator 352 can be trained according to an objective function that reconstructs both the color data and the input normals for the image sequence, e.g., relative to a ground truth sequence. Although FIG. 3B depicts a minimization of error between predicted image normals 357 and input normals 341, the predictive network 338 can also be trained to minimize error between an input auxiliary buffer, e.g., auxiliary buffer data 343 and/or 378, and a model output of the predictive network 338, e.g., the model output representing the predicted auxiliary buffer data based on the de-noised image sequence 354.

In some implementations, de-noising performed by the GAN 336 can be performed in a runtime where the predictive network 338 concurrently matches the input image sequences 340 with the input normals data 341, e.g., during the runtime of the GAN 336. The predictive network 338 can be trained to identify differences between the predicted image normals 357 generated from de-noised image sequence 354, and the input normals data 341. The predictive network 338 can determine an error between the predicted image normals 357 and the input normals data 341, e.g., mean-square error, and update the training module 312 can update the generator parameters 374 to reduce the error for predictions generated by the generator 352.

The GAN 336 can be configured by the training module 312 to perform a number of training steps that can be performed sequentially on an image-by-image basis, e.g., each image from a sequence of images can be provided to the generator 352 to generate the synthetic output, depicted as a generator output in FIG. 3B as the de-noised image sequence 354. In some implementations, the generator 352 can generate a de-noised auxiliary buffer data 380, based on receiving auxiliary buffer data 378 as an input or by processing auxiliary buffer data directly from the input image sequence 340. The training objective for the generator is to generate an output sequence of images with a lower likelihood of temporal artifacts occuring among two or more images from an input sequence processed by the generator. One or more outputs of the generator are provided to the discriminator 356.

The discriminator 356 compares the de-noised image sequence 354 to a training example or "target" de-noised sequence, such as a ground truth image sequence 342. The discriminator 356 can be trained to identify which of the de-noised image sequence 354 and the ground truth image sequence is a temporally stable de-noised image, e.g., more likely to be a de-noised temporally stable. The discriminator 356 can generate a discriminator output 358 that includes a label indicating, from the de-noised image sequence 354 (e.g., the output of generator 352) and the ground truth image sequence 342, is a de-noised temporally stable image sequence. In some implementations, the discriminator 356 need not to compare the de-noised image sequence 354 to the ground truth image sequence 342 but can be configured to generate a classification label indicating whether the de-noised image sequence 354 is temporally stable.

Upon the discriminator 356 correctly classifying the de-noised image sequence 354 as the synthetic output from the generator (e.g., indicating a successful detection of the synthetic output), the de-noising generator training module 364 of the training module 312 can update parameters for the generator 352 by determining and providing the generator parameters 374. A new generator output can be generated based on the updated generator parameters 374. The new generator output can be a new de-noised image sequence 354 based on the input image sequence 340 and/or a new de-noised auxiliary buffer data 380 based on auxiliary buffer data in the input image sequence 340. As described above, new de-noised auxiliary buffer data 380 can be generated from auxiliary buffer data 378.

The new de-noised image sequence is an updated generator output (e.g., a new synthetic output) corresponding to the input image sequence 340 that can be more likely to be classified as a de-noised temporally stable image sequence in the next training step. If the discriminator 356 incorrectly classifies the de-noised image sequence 354 as a "real," de-noised, temporally stable image sequence, e.g., the output of generator 352 is similar to as a ground truth image sequence 345 corresponding to the input image sequence 340, the discriminator training module 366 of the training module 312 can determine and update parameters for the discriminator 356, such as by generating and providing discriminator parameters 370 to the discriminator 356. Another comparison step or iteration can be performed with the discriminator 356 using the updated discriminator parameters 370.

A number of iterations can be performed until the GAN achieves a threshold performance metric, such as a threshold amount of temporal artifact reduction and/or de-noising by the generator 352. Examples of validation performance metrics can include Structural Similarity Index Measure (SSIM), Peak Signal-to-Noise Ratio (PSNR), Learned Perceptual Image Patch Similarity (LPIPS), among other metrics for comparing model outputs to ground truth example sequences. Examples of metrics for training the GAN 336 can include temporal stability metrics such as Field of View - Visual Difference Predictor (FovVDP), temporal warping error (e.g., motion consistency), temporal LPIPS (e.g., perceptual stability), PSNR / SSIM over time, Fréchet Video Distance (FVD) for video evaluation, temporal flicker index (e.g., visual smoothness), Standard Deviation of Pixel Differences (e.g., across one or more time instances), Video Multi-Method Assessment Fusion (VMAF) for streaming/video quality.

The training module 312 includes a de-noising generator training module 364 for training the generator 352, a discriminator training module 366 for training the discriminator 356, and a predictive network training module 368 for training the predictive network 338. The training module 312 includes a loss module 372 that can be used by the respective module for training the generator 352, discriminator 356, predictive network 338, or some combination thereof. The loss module 372 can be used to apply an adversarial loss to train the de-noising generator 352 towards improving temporal stability while de-noising image sequences. As an example, training the generator 352 can include minimizing loss to improve the temporal stability of generator outputs, whereas training the discriminator 356 is minimizing loss to improve classification of whether a de-noised sequence of images is temporally stable or unstable. In some implementations, the adversarial loss can be combined with an image reconstruction loss, e.g., a comparison of the de-noised image sequence generated by the generator 352 to the ground truth image sequence 342. Examples of the image reconstruction loss can include L1 loss, perceptual loss, among others. The adversarial loss can be combined with an image reconstruction loss to reduce an overall loss of the GAN 336.

The training module 312 can minimize, using the loss module 372, multiple loss functions simultaneously: a first loss function by the discriminator training module 366 for discriminator 356, a second loss function by the de-noising generator training module 364 for generator 352, and a third loss function by the predictive network training module 368 for predictive network training module 368. Minimizing multiple loss functions for multiple networks provides generator parameters 374 that have a higher likelihood of de-noising images in a sequence with temporal stability, discriminator parameters 370 that have a higher likelihood of correctly de-noised and temporally stable image sequences, and predictive network parameters 375 that have a higher likelihood of determining image normals for an input sequence of images based on the de-noised output from the generator 352. The training module 312 can apply a number of optimization techniques to minimize loss functions for the loss module 372.

The training for the generator 352 and discriminator 356 can be done sequentially, e.g., one-step of by the de-noising generator training module 364, followed by one-step by the discriminator training module 366. A complete training iteration of the GAN 336 for all images in an input image sequence 340 and corresponding images in the ground truth image sequence 342 can be referred to as an epoch. As indicated by the dashed line, the training module 312 can directly receive the ground truth image sequence 342 to perform the evaluation step in training the discriminator 356. The output of the training module 312 can be a generator 352 trained with a number of epochs that meets a threshold error rate for de-noising and/or temporal stability.

The discriminator parameters 370 for discriminator 356, generator parameters 374 for generator 352, and predictive network parameters 375 for predictive network 338, can be stored in memory for performing inferences tasks using the GAN 336, e.g., de-noising and temporal stabilization. The trained GAN 336 can include the generator 352 at the epoch number that satisfies the training module 312, particularly the de-noising generator training module 364, e.g., achieving an error rate below a threshold value. The parameters can also be stored in training data storage 362. As described in reference to FIG. 3A, the training module 332 of the gaming platform 330 can also be configured to perform a similar training process and the parameters for a trained GAN 336 can be provided in the form of training data 326.

In some implementations, the GAN 336 includes an encoder/decoder 360 to apply encoding/decoding techniques, respectively. For example, the encoder/decoder 360 can encode image sequences generated by the generator 352 for an inference task and provided the encoded image sequence as an output image sequence 344. In some implementations, the GAN 336 uses the encoder/decoder 360 to decode an encoded input, such as an input image sequence 340, input normals data 341, auxiliary buffer data 343, auxiliary buffer data 378, ground truth image sequence 342, or some combination thereof. The decoded input can be provided to the generator 352, e.g., in the case where the input is the input image sequence 340 and/or input normals data 341, and/or the discriminator, e.g., in the case where the input is the ground truth image sequence 342. In some implementations, the encoder/decoder 360 can be configured to combine image sequences, such as separately processed generator outputs, to form an output image sequence 344.

In some implementations, networks of the GAN 336 such as generator 352 and discriminator 356, and/or the predictive network 338 can be trained using a variety of training techniques, including supervised and unsupervised learning techniques. In some implementations, generator 352, discriminator 256, the predictive network 338, or some combination thereof, can be trained using hybrid-learning techniques. The parameters or weights of a network can be adjusted based on an analysis of parameters for the network and previous output. For example, the generator 352 can be trained to de-noise image sequences with fewer to zero temporal artifacts, the discriminator 356 can be trained to classify image sequences temporally stable or unstable, and the predictive network 338 can be trained to evaluate de-noising performance, e.g., based on auxiliary buffers. In some implementations, a network such as generator 352, discriminator 356, and predictive network 338, can include one or more fully or partially connected layers and each of the layers can include one or more parameter values indicating an output of the layers.

In some implementations, the generator 352, the discriminator 356, the predictive network 338, or some combinations thereof, can be neural networks that employ layers of nodes, including hidden layers, to generate an output for a received input. For example, a layer of the neural network can generate an output from a received input in accordance with current values of a respective set of parameters. The layers of the networks can have an associate set of kernels, which may correspond to parameters or weights. The associated set of kernels are used to process inputs (e.g., a batch of inputs) through the neural network layer to generate a corresponding output of the layer for computing a neural network inference. A batch of inputs and a set of kernels can be represented as a vector or matrix of inputs and weights. A batch of inputs and a set of kernels can also be represented as a tensor (n-rank), e.g., a multidimensional array, of inputs and weights.

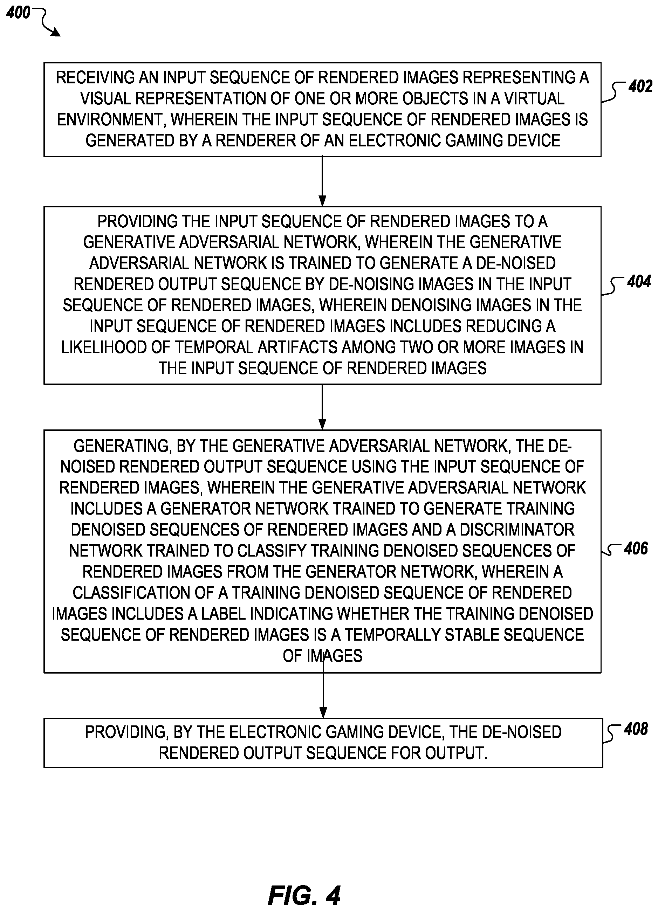

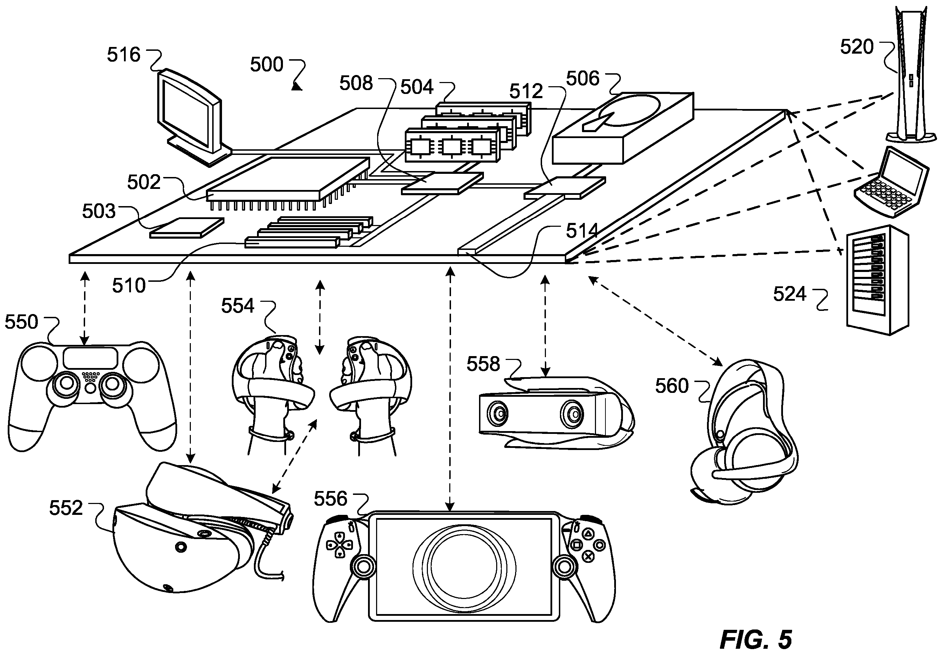

FIG. 4 is a flow diagram of an example process 400 in accordance with implementations of the present disclosure. For example, an electronic gaming device 304 can include a GAN 336 and be configured to perform process 400, e.g., generating de-noised and temporally stable image sequences of a video game for video output. In some implementations, the process 400 is performed by a computing device. Such a computing device is subsequently described in more detail in relation to FIG. 5.

In step 402, the process 400 includes receiving an input sequence of rendered images representing a visual representation of one or more objects in a virtual environment. The input sequence of rendered images is generated by a renderer of an electronic gaming device. Each image from the input sequence of rendered images captures the virtual environment at a different respective time instance another image in the input sequence of images. In some implementations, receiving the input sequence of rendered images includes receiving, from the renderer of the electronic gaming device, one or more auxiliary buffers corresponding to images in the input sequence of rendered images, each of the one or more auxiliary buffers includes image data for the input sequence of rendered images.

In step 404, the process 400 includes providing the input sequence of rendered images to a generative adversarial network. The generative adversarial network is trained to generate a de-noised rendered output sequence by de-noising images in the input sequence of rendered images. Denoising images in the input sequence of rendered images includes reducing a likelihood of temporal artifacts among two or more images in the input sequence of rendered images.

In some implementations, the de-noised rendered output sequence is generated based on the input sequence of rendered images and at least one auxiliary buffer from one or more the auxiliary buffers. In some implementations, an auxiliary buffer from the one or more auxiliary buffers includes a data structure storing the image data, the image data representing simulated visual properties of the one or more objects in the virtual environment. In some implementations, the data structure is an image map to store the image data. In some implementations, the image data represents one of more of (i) depth, (ii) surface orientation, (iii) albedo, (iv) ambient occlusion, (v) specular reflection intensity, (vi) shadow intensity, (vii) light emission, (viii) motion, (ix) surface normal vectors, (x) surface roughness, for at least one of the one or more objects in the virtual environment.

In step 406, the process 400 includes generating, by the generative adversarial network, the de-noised rendered output sequence using the input sequence of rendered images. The generative adversarial network includes a generator network trained to generate training denoised sequences of rendered images and a discriminator network trained to classify training denoised sequences of rendered images from the generator network. A classification of a training denoised sequence of rendered images includes a label indicating whether the training denoised sequence of rendered images is a temporally stable sequence of images.

In step 408, the process 400 includes providing, by the electronic gaming device, the de-noised rendered output sequence for output.

In some implementations, the process 400 further includes providing the de-noised rendered output sequence to a predictive network trained to generate predicted normal vectors for objects in the virtual environment. The predictive network is trained by reducing a difference between the predicted normal vectors and input normal vectors for objects in the input sequence of rendered images. The input normal vectors are generated by the renderer of the electronic gaming device. The process 400 can include generating, by the predictive network and based on the de-noised rendered output sequence, the predicted normal vectors. The process 400 includes updating one or more parameters of the generator network based on a comparison of the predicted normal vectors and the input normal vectors for the objects in the input sequence of rendered images. In some implementations, updating the one or more parameters of the generator network includes determining an error between the predicted normal vectors and the input normal vectors is above a threshold value.

In some implementations, the process 400 includes the generator network is trained to generate training de-noised auxiliary buffer data and the discriminator network is trained to classify training de-noised auxiliary buffer data from the generator network. A classification of the training de-noised auxiliary buffer data includes a second label indicating whether the training de-noised auxiliary buffer data is temporally stable.

In some implementations, generating the de-noised rendered output sequence includes generating, by the generative adversarial network and using the input sequence of rendered images, a first de-noised output sequence. Generating the de-noised rendered output sequence includes extracting features from one or more auxiliary buffers for the input sequence of rendered images and combining the first de-noised output sequence with the extracted features from the one or more auxiliary buffers for the input sequence of rendered images to generate the de-noised rendered output sequence.

In some implementations, the label indicating that the training denoised sequence of rendered images is a temporally stable sequence of images includes determining that the training denoised sequence of rendered images has a same or fewer number of temporal artifacts compared to a ground truth denoised sequence of rendered images. The ground truth denoised sequence of rendered images being rendered using full path tracing.

In some implementations, providing the de-noised rendered output sequence for output includes writing the de-noised rendered output sequence into a framebuffer of the electronic gaming device and transmitting, by the electronic gaming device and using the framebuffer, video output to a display device connected to the electronic gaming device.

FIG. 5 shows an example of a computing device 500 and associated accessories that can be employed to execute implementations of the present disclosure. The computing device 500 can be a gaming console 520, such as PS5^{®}, PS4^{®}, PS3^{®}, PS2^{®} etc., or as one or more servers 524 or as a rack within a server. In some implementations, the computing device 500 may be implemented as a personal computer such as a laptop computer 522. In some implementations, the computing device 500 can be implemented as a mobile device such as the connected handheld gaming device 556. In some implementations, a computing device can include one or more of the computing device 500, and an entire system may be made up of multiple computing devices communicating with each other. For example, a gaming system can include one or more of a gaming console 520, one or more accessories, and a remote platform such as a cloud-based platform implemented on one or more servers 524. The computing device can also include a desktop computer, a workstation, a personal digital assistant, a server, a blade server, a mainframe, or other appropriate type of computer. The components shown here, their connections and relationships, and their functions, are examples only, and are not limiting.

In various implementations, the computing device 500 includes some combination of one or more processors or central processing units (CPUs) 502, one or more graphic processing units (GPUs) 503, memory 504, one or more storage devices 506, a high-speed interface 508, and/or a low-speed interface 512. In some implementations, the high-speed interface 508 connects to the memory 504 and multiple high-speed expansion ports 510. In certain implementations, the low-speed interface 512 connects to a low-speed expansion port 514 and the storage device 506. In some implementations, the high-speed interface 508 connects to the storage device 506. Each of the processor 502, the GPU 503, the memory 504, the storage device 506, the high-speed interface 508, the high-speed expansion ports 510, and the low-speed interface 512, are interconnected using various buses, and may be mounted on a common motherboard or in other manners as appropriate. The processor 502 can process instructions for execution within the computing device 500, including instructions stored in the memory 504 and/or on the storage device 506 to display graphical information for a graphical user interface (GUI) on an external input/output device, such as a display 516 coupled to the high-speed interface 508. In other implementations, multiple processors and/or multiple buses may be used, as appropriate, along with multiple memories and types of memory. In addition, multiple computing devices may be connected, with each device providing portions of the necessary operations (e.g., as a server bank, a group of blade servers, or a multi-processor system).

The memory 504 stores information within the computing device 500. In some implementations, the memory 504 includes a volatile memory unit or units. Alternatively, or in addition, the memory 504 can include a non-volatile memory unit or units. The memory 504 may also include another form of a computer-readable medium, such as a magnetic or optical disk. In some implementations, the memory 504 includes Graphics Double Data Rate (GDDR) memory such as GDDR6 memory configured to provide a unified memory architecture with a high bandwidth. In some implementations, the memory can include high speed memory such as GDDR2, GDDR3, GDDR4, GDDR5, GDDR5X, GDDR6X, GDDR6W or GDDR7. Such high-speed memory can facilitate rapid data access and seamless multitasking, supporting gaming and multimedia applications.

The storage device 506 provides mass storage for the computing device 500. In some implementations, the storage device 506 may be or include a computer-readable medium, such as a hard disk device, an optical disk device, a flash memory, or other similar solid-state memory device, or an array of devices, including devices in a storage area network or other configurations. In some implementations, the storage device 506 can include a high capacity solid-state drive (SSD) configured to support a high throughput (e.g., 5.5 GB/s or more). Such an SSD can facilitate fast load times, enabling near-instantaneous game booting, level transitions, and asset streaming. In some implementations, the storage device 506 can be configured to support expandable storage via compatible non-volatile memory express (NVMe) SSDs. Instructions can be stored in an information carrier, and when executed by one or more processing devices, such as processor 502, perform one or more methods, such as those described above. The instructions can also be stored by one or more storage devices, such as non-transitory computer-readable or machine-readable mediums, such as the memory 504, the storage device 506, or memory on the processor 502. The instructions can constitute software for providing interactive game play on a user interface such as a graphical user interface (GUI) presented on the display 516.

The high-speed interface 508 generally manages bandwidth-intensive operations for the computing device 500, while the low-speed interface 512 generally manages lower bandwidth-intensive operations. Such allocation of functions is an example only. In some implementations, the high-speed interface 508 is coupled to the memory 504, the display 516 (e.g., through a graphics processor or accelerator), and to the high-speed expansion ports 510, which accepts various expansion cards. In the implementation, the low-speed interface 512 is coupled to the storage device 506 and the low-speed expansion port 514. The low-speed expansion port 514, which may include various communication ports (e.g., Universal Serial Bus (USB) Type-A and Type-C ports, High-Definition Multimedia Interface (HDMI) ports, Bluetooth, Ethernet, wireless Ethernet) may be coupled to one or more input/output and/or accessory devices. Such input/output and accessory devices can include a controller 550 such as a DualSense^{®}, DualShock^{®}, or Access^{™} controllers for PlayStation^{®} devices, a VR or AR headset 552 such as the PS VR2 headset, accessory controllers 554 such as PS VR2 Sense^{™}, a handheld gaming device 556 such as PlayStation Portal^{®}, a camera 558, and/or an earphone/headphone set 560 such as the PULSE Elite^{™} headset or the Pulse Explore^{™} earbuds. In some implementations, the computing device 500 includes one or more acoustic transducers, and/or is connected to one or more external acoustic transducers such as one or more speakers associated with the display 516.

The processor 502 can be implemented as a chipset of chips that include separate and multiple analog and digital processors. For example, the processor 502 can be a multi-core processor that supports high-speed processing and enables complex computational tasks, real-time physics simulations, and advanced artificial intelligence (AI) capabilities. In one example, the processor 502 includes at least 8 cores, at least 16 threads, and operates at variable frequencies around 3.5 GHz or more. In some implementations, the processor 502 may be a Complex Instruction Set Computers (CISC) processor, a Reduced Instruction Set Computer (RISC) processor, or a Minimal Instruction Set Computer (MISC) processor.

In some implementations, the GPU 503 includes a custom GPU that supports an advanced architecture such as the RDNA 2 architecture developed by AMD. In certain examples, the GPU 503 includes at least 36 compute units running at speeds of 2 GHz or more, and delivers performance of at least 10 teraflops. The GPU 503 can be configured to support high quality graphics rendering. For example, the GPU 503 can be configured to support hardware-accelerated ray tracing for enhanced realism in lighting and reflections, thereby providing a highly immersive gaming experience.

The computing device 500 can be configured to interact with one or more connected input/output or accessory device in providing the gaming experience. In some implementations, the computing device communicates with a handheld controller 550-e.g., a DualSense^{®}, DualShock^{®}, or Access^{™} controller for PlayStation^{®} devices-to provide the gaming experience. The controller 550 can feature a high-fidelity haptic feedback system with one or more actuators that simulate a wide range of tactile sensations. In some implementations, the controller 550 includes one or more adaptive triggers that adjust resistance based on in-game actions to provide for a realistic feel.

The ergonomic design of the controller 550 can allow for comfortable use even in long gaming sessions. For example, the controller 550 can include textured grips and an optimized button layout. In some implementations, the controller 550 includes one or more of: integrated motion sensors, a high-resolution touchpad, and a built-in microphone array. The controller 550 includes an array of buttons, joysticks, and other controls that allow a user to interact with the computing device 500 to participate in interactive gameplay presented, for example, on a display device such as the display 516. The controller 550 can be powered by one or more regular or rechargeable batteries and supports both wireless and wired connectivity with the computing device 500, for example, via Bluetooth, WiFi, USB-C etc., or via a proprietary connection such as PlayStation Link^{™}. In some implementations, the controller 550 includes a light bar and player indicators for visual feedback and customization.

In some implementations, the input/output or accessory device includes a VR/AR headset 552. One example of such a headset is the PlayStation VR2 (PS VR2) headset that is configured to provide an immersive and interactive gaming experience. In some implementations, the headset 552 features dual displays, e.g., organic light emitting device displays or micro-LED displays, with a combined resolution of 4000 5 2080 pixels or higher-thus providing sharp visuals and a wide field of view.

In some implementations, the VR/AR headset 552 includes eye-tracking technology that enables foveated rendering, by focusing on where the user is looking. In some implementations, the headset 552 includes integrated cameras that facilitate tracking head movements without external sensors. In some implementations, the headset includes haptic feedback for tactile sensations and/or one or more acoustic transducers configured to provide a spatial sound effect the user. The headset 552 can include an adjustable headband and cushioned padding, and can be configured to connect to the computing device 500 either over a wireless network (e.g., over a WiFi^{®} or Bluetooth^{®} connection, or a proprietary connection such as PlayStation Link^{™}) or over a wire such as a USB-C cable.

In some implementations, the headset 552 can be configured to work in conjunction with one or more accessory controllers 554 such as the PlayStation VR2 Sense^{™} controllers. The accessory controllers 554 can enhance the immersive gaming experience through various features such as advanced haptic feedback for detailed in-game sensations, adaptive triggers with dynamic resistance to simulate real-world actions, and finger touch detection for natural interactions. The ergonomics of the accessory controllers 554 can provide a comfortable experience even during extended gameplay. In some implementations, the accessory controllers include one or more integrated sensors (accelerometer, gyroscope, etc.) and/or cameras to provide motion tracking. The accessory controllers 554 can be configured to connect to the computing device 500 and/or the headset 552 over a wireless connection such as WiFi^{®} or Bluetooth^{®}.

In some implementations, the computing device 500 is connected to a handheld gaming device 556 such as the PlayStation Portal^{®}. The handheld gaming device 556 can be configured to stream games and media from the computing device 500 via a wireless connection such as WiFi^{®} or Bluetooth^{®}. The handheld gaming device 556 includes a high-resolution screen that allows users to play games and/or stream media remotely without using the display 516 connected to the computing device 500. This allows the display to be used for other purposes while the computing device 500 facilitates gameplay on the handheld gaming device 556. In some implementations, the handheld gaming device 556 is configured to act as a streaming receiver without running games natively on the device 556 itself. This makes the handheld gaming device 556 a convenient option for playing games run on the computing device 500, while leaving a TV connected to the computing device 500 free to be used for viewing other media. The handheld gaming device 556 can includes buttons and features similar to (or even same as) the controller 550, thus providing for a similar gaming experience as that with the controller 550.

In some implementations, the input/output or accessory devices includes a camera 558 and/or an earphone/headphone set 560 such as the PULSE Elite^{™} headset or the Pulse Explore^{™} earbuds. The camera 558 can be used to track user-movements, which in turn can be used as an input to an interactive game being executed on the computing device 500. The earphone/headphone set 560 can be used to provide audio feedback/output to a user from the computing device 500. In some implementations, the earphone/headphone set 560 can include a microphone to receive spoken inputs/instructions that in turn can be used to control an interactive game being executed on the computing device 500.

While this specification contains many specific implementation details, these should not be construed as limitations on the scope of what is being claimed, which is defined by the claims themselves, but rather as descriptions of features that may be specific to particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claim may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A computer-implemented method comprising:
receiving an input sequence of rendered images representing a visual representation of one or more objects in a virtual environment, wherein the input sequence of rendered images is generated by a renderer of an electronic gaming device;
providing the input sequence of rendered images to a generative adversarial network, wherein the generative adversarial network is trained to generate a de-noised rendered output sequence by de-noising images in the input sequence of rendered images, wherein denoising images in the input sequence of rendered images comprises reducing a likelihood of temporal artifacts among two or more images in the input sequence of rendered images;
generating, by the generative adversarial network, the de-noised rendered output sequence using the input sequence of rendered images, wherein the generative adversarial network comprises a generator network trained to generate training denoised sequences of rendered images and a discriminator network trained to classify training denoised sequences of rendered images from the generator network, wherein a classification of a training denoised sequence of rendered images comprises a label indicating whether the training denoised sequence of rendered images is a temporally stable sequence of images; and
providing, by the electronic gaming device, the de-noised rendered output sequence for output.

2. The computer-implemented method of claim 1, wherein receiving the input sequence of rendered images comprises receiving, from the renderer of the electronic gaming device, one or more auxiliary buffers corresponding to images in the input sequence of rendered images, each of the one or more auxiliary buffers comprising image data for the input sequence of rendered images.

3. The computer-implemented method of claim 2, wherein the de-noised rendered output sequence is generated based on the input sequence of rendered images and at least one auxiliary buffer from one or more the auxiliary buffers.

4. The computer-implemented method of claim 2, wherein an auxiliary buffer from the one or more auxiliary buffers comprises a data structure storing the image data, the image data representing simulated visual properties of the one or more objects in the virtual environment.

5. The computer-implemented method of claim 4, wherein the data structure is an image map to store the image data.

6. The computer-implemented method of claim 4, wherein the image data represents one of more of (i) depth, (ii) surface orientation, (iii) albedo, (iv) ambient occlusion, (v) specular reflection intensity, (vi) shadow intensity, (vii) light emission, (viii) motion, (ix) surface normal vectors, (x) surface roughness, for at least one of the one or more objects in the virtual environment.

7. The computer-implemented method of claim 1, further comprising:
providing the de-noised rendered output sequence to a predictive network trained to generate predicted normal vectors for objects in the virtual environment, wherein the predictive network is trained by reducing a difference between the predicted normal vectors and input normal vectors for objects in the input sequence of rendered images, wherein the input normal vectors are generated by the renderer of the electronic gaming device;
generating, by the predictive network and based on the de-noised rendered output sequence, the predicted normal vectors; and
updating one or more parameters of the generator network based on a comparison of the predicted normal vectors and the input normal vectors for the objects in the input sequence of rendered images.

8. The computer-implementation method of claim 7, wherein updating the one or more parameters of the generator network comprises determining an error between the predicted normal vectors and the input normal vectors is above a threshold value.

9. The computer-implemented method of claim 1, wherein the generator network is trained to generate training de-noised auxiliary buffer data and the discriminator network is trained to classify training de-noised auxiliary buffer data from the generator network, wherein a classification of the training de-noised auxiliary buffer data comprises a second label indicating whether the training de-noised auxiliary buffer data is temporally stable.

10. The computer-implemented method of claim 1, wherein generating the de-noised rendered output sequence comprises:
generating, by the generative adversarial network and using the input sequence of rendered images, a first de-noised output sequence;
extracting features from one or more auxiliary buffers for the input sequence of rendered images; and
combining the first de-noised output sequence with the extracted features from the one or more auxiliary buffers for the input sequence of rendered images to generate the de-noised rendered output sequence.

11. The computer-implemented method of claim 1, wherein the label indicates that the training denoised sequence of rendered images is a temporally stable sequence of images by:
determining that the training denoised sequence of rendered images has a same or fewer number of temporal artifacts compared to a ground truth denoised sequence of rendered images, the ground truth denoised sequence of rendered images being rendered using full path tracing.

12. The computer-implemented method of claim 1, wherein providing the de-noised rendered output sequence for output comprises:
writing the de-noised rendered output sequence into a framebuffer of the electronic gaming device; and
transmitting, by the electronic gaming device and using the framebuffer, video output to a display device connected to the electronic gaming device.

13. A computer-implemented system comprising:
at least one processor; and
a memory storing instructions that, when executed by the at least one processor, cause the at least one processor to perform operations, comprising:
receiving an input sequence of rendered images representing a visual representation of one or more objects in a virtual environment, wherein the input sequence of rendered images is generated by a renderer of an electronic gaming device;
providing the input sequence of rendered images to a generative adversarial network, wherein the generative adversarial network is trained to generate a de-noised rendered output sequence by de-noising images in the input sequence of rendered images, wherein denoising images in the input sequence of rendered images comprises reducing a likelihood of temporal artifacts among two or more images in the input sequence of rendered images;
generating, by the generative adversarial network, the de-noised rendered output sequence using the input sequence of rendered images, wherein the generative adversarial network comprises a generator network trained to generate training denoised sequences of rendered images and a discriminator network trained to classify training denoised sequences of rendered images from the generator network, wherein a classification of a training denoised sequence of rendered images comprises a label indicating whether the training denoised sequence of rendered images is a temporally stable sequence of images; and
providing, by the electronic gaming device, the de-noised rendered output sequence for output.

14. The computer-implemented system of claim 13, wherein receiving the input sequence of rendered images comprises receiving, from the renderer of the electronic gaming device, one or more auxiliary buffers corresponding to images in the input sequence of rendered images, each of the one or more auxiliary buffers comprising image data for the input sequence of rendered images.

15. The computer-implemented system of claim 14, wherein the de-noised rendered output sequence is generated based on the input sequence of rendered images and at least one auxiliary buffer from one or more the auxiliary buffers and an auxiliary buffer from the one or more auxiliary buffers comprises a data structure storing the image data, the image data representing simulated visual properties of the one or more objects in the virtual environment.

16. The computer-implemented system of claim 15, wherein the image data represents one of more of (i) depth, (ii) surface orientation, (iii) albedo, (iv) ambient occlusion, (v) specular reflection intensity, (vi) shadow intensity, (vii) light emission, (viii) motion, (ix) surface normal vectors, (x) surface roughness, for at least one of the one or more objects in the virtual environment.

17. One or more non-transitory computer readable media storing instructions, wherein the instructions, when executed by at least one processor, cause the at least one processor to perform operations, comprising:
receiving an input sequence of rendered images representing a visual representation of one or more objects in a virtual environment, wherein the input sequence of rendered images is generated by a renderer of an electronic gaming device;
providing the input sequence of rendered images to a generative adversarial network, wherein the generative adversarial network is trained to generate a de-noised rendered output sequence by de-noising images in the input sequence of rendered images, wherein denoising images in the input sequence of rendered images comprises reducing a likelihood of temporal artifacts among two or more images in the input sequence of rendered images;
generating, by the generative adversarial network, the de-noised rendered output sequence using the input sequence of rendered images, wherein the generative adversarial network comprises a generator network trained to generate training denoised sequences of rendered images and a discriminator network trained to classify training denoised sequences of rendered images from the generator network, wherein a classification of a training denoised sequence of rendered images comprises a label indicating whether the training denoised sequence of rendered images is a temporally stable sequence of images; and
providing, by the electronic gaming device, the de-noised rendered output sequence for output.

18. The one or more non-transitory computer readable media of claim 17, wherein receiving the input sequence of rendered images comprises receiving, from the renderer of the electronic gaming device, one or more auxiliary buffers corresponding to images in the input sequence of rendered images, each of the one or more auxiliary buffers comprising image data for the input sequence of rendered images.

19. The one or more non-transitory computer readable media of claim 18, wherein the de-noised rendered output sequence is generated based on the input sequence of rendered images and at least one auxiliary buffer from one or more the auxiliary buffers and an auxiliary buffer from the one or more auxiliary buffers comprises a data structure storing the image data, the image data representing simulated visual properties of the one or more objects in the virtual environment.

20. The one or more non-transitory computer readable media of claim 19, wherein the image data represents one of more of (i) depth, (ii) surface orientation, (iii) albedo, (iv) ambient occlusion, (v) specular reflection intensity, (vi) shadow intensity, (vii) light emission, (viii) motion, (ix) surface normal vectors, (x) surface roughness, for at least one of the one or more objects in the virtual environment.
